Europäisches Patentamt

European Patent Office

Office européen des brevets

(19)

(11) Publication number: **0 113 206**
**B1**

(12) **EUROPEAN PATENT SPECIFICATION**

(45) Date of publication of patent specification: **13.07.88**

(51) Int. Cl.⁴: **F 16 L 37/28, F 16 L 37/22**

(21) Application number: **83307447.9**

(22) Date of filing: **07.12.83**

(54) **Fluid couplers.**

(30) Priority: **20.12.82 US 450890**

(43) Date of publication of application:
**11.07.84 Bulletin 84/28**

(45) Publication of the grant of the patent:
**13.07.88 Bulletin 88/28**

(84) Designated Contracting States:
**DE FR GB**

(56) References cited:
**EP-A-0 051 201**
**FR-A-1 007 440**
**US-A-3 490 491**
**US-A-3 530 887**

(73) Proprietor: **PARKER HANNIFIN CORPORATION**
**17325 Euclid Avenue**
**Cleveland Ohio 44112 (US)**

(72) Inventor: **Johnson, Lyle R.**
**1037 Hampshire Avenue North**
**Minneapolis Minnesota 55427 (US)**
Inventor: **Herzan, Eugene H.**
**5056 Belwood Lane**
**Minnetonka Minnesota 55343 (US)**

(74) Representative: **Purvis, William Michael**
**Cameron et al**
**D. Young & Co. 10 Staple Inn**
**London WC1V 7RD (GB)**

Courier Press, Leamington Spa, England.

## Description

The invention relates to fluid couplers, and more particularly to a rigid mount coupler for releasably connecting high pressure conduits when at least the conduit connected to the nipple is pressurized.

Prior art couplers for this purpose include a valved body on one of the conduits and a valved nipple on the other conduit. Typically the valved body is supported within a housing and the housing in turn is resiliently supported within a collar. The collar is fixed to a tractor, for example, and receives fluid under pressure from a power source on the tractor by way of a shutoff valve. In devices such as this, there is relative motion between the body and collar in order to attain coupling with, for example, an implement connected by way of hose terminating in a nipple. Therefore, it is also necessary to use hose between the tractor and the valved body of the coupler in order to accommodate such movement. In many applications there are severe space limitations on a tractor which are further exacerbated by the need to allow room for hose or coupler movement. It is typical in such applications that pressure and return conduits be provided for each implement powered by the tractor, resulting in a great number of hoses and couplers.

Also typical of prior art devices are couplers which require the use of two hands in order to achieve coupling. Usually, an external collar is provided for this purpose which co-operates with a ball locking mechanism or the like. Such external collar must be retracted to allow the nipple to be inserted in the coupler, with spring return of the collar securing the balls and thus the nipple. Typically in devices of this type, and particularly for agricultural implements, a breakaway coupler must be provided to allow automatic disconnection upon receiving a force at the nipple. Also valves are usually employed in both the nipple and coupler to prevent the loss of fluid.

Prior art couplers which include valved nipples and valved bodies and some or all of the features mentioned are shown in U.S. Patent Nos. 4,222,411, 3,530,887 and 3,163,178.

A coupler having all the features of the precharacterising part of claim 1 is disclosed in EP-A-0051201.

According to the invention there is provided a rigid mount coupler, comprising:

a housing;

a body member within the housing supported for axial movement relative to the housing between an inner and an outer position, the body member having an axially inner end and an axially outer end;

a nipple receivable in the body member at said axially outer end, the nipple having a nipple valve and a seat therein and bias means resiliently urging the nipple valve to a normally closed position, the nipple being engageable with the body member for moving the body member therewith to the inner position and to the outer position;

locking means on the body member holding the nipple at the inner position and releasing the nipple at said outer position;

a valve seat in the body member;

a coupler valve; and

support means resiliently supporting the coupler valve in the body member for axial movement toward and away from the valve seat, the coupler valve being engageable by the nipple valve, characterised in that the support means provides substantially the same force as the nipple valve bias means to balance both the valves at open positions relative to the respective valve seats; and

flow check means is resiliently supported in the body member and is engageable with the coupler valve to resist movement of the coupler valve to a more open position than the balanced open position, thereby also to resist movement of the nipple valve toward the nipple valve seat.

In such a coupler the valving and the coupling mechanism are contained within the coupler housing and no movement of the housing is required. This allows the coupler to be fixed in relation to a tractor, for example, and thus it may be mounted to rigid conduit leading from the tractor power source. Fluid communication is made between the housing and the relatively movable body member contained therein. Since the body member is sealed by the coupler valve, accommodation must be made for fluid trapped therein and this can be provided in a sealed step chamber between the body member and the housing. The step chamber is dimensioned so that changes in volume thereof upon relative movement between the body member and the housing, correspond to the changes of volume of a chamber trapped by the coupler valve. Fluid communication can be provided by a transverse bore in the body member between the chambers.

A typical ball locking mechanism can be utilized to secure the nipple in the coupler, the lock being disengaged when the body member is in an outward position with respect to the housing and engaged when in an inner position. Movement of the body member between inner and outer positions can be effected solely by engagement with the valved nipple. A detent is provided at each of these positions to assist in securing the nipple. However a triple seal arrangement between the body and housing can ensure a balance of fluid pressures on the body member or at least a bias toward the coupled position to assist in retaining the nipple. Two of these seals can be used as the seals for the step chamber previously mentioned.

The nipple and coupler valves prevent loss of fluid and both may be spring loaded valves which engage each other and, once pressures are equalized within the coupler, hold each other in the balanced valve open position in relation to their respective valve seats. The flow check means can prevent lock-up of the nipple valve upon sudden flow surges from the implement.

The flow check means is preferably a springloaded pin which is supported in the body member and is limited in its axial travel directly to engage the coupler valve when it is approximately at its open position in balance with the nipple valve. Further opening movement is resiliently resisted by the pin, thus preventing closure and lock-up of the nipple valve.

The flow check mechanism also provides a function during coupling of an implement under pressure. Positioning of the nipple within the entrance to the body member during movement of the body member to the coupled position causes the fluid-locked nipple valve to engage the coupler valve and move the coupler valve into engagement with the spring loaded pin. The spring biasing the pin is stronger than the nipple valve spring so that once the body member is pressurized by opening of a control valve, the hydraulic force seating the nipple valve is overcome and the springs take over, causing further opening of the nipple valve and return of both valves to the balanced position.

The coupler can have a substantially straight bore configuration so that fluid flow is along the axis of the coupler, resulting in minimal pressure drop.

The invention is diagrammatically illustrated by way of example in the accompanying drawing, in which:.

Figure 1 is a cross-sectional side view of a coupler according to the invention in an uncoupled configuration;

Figure 2 is a cross-sectional side view of the coupler of Figure 1 with a nipple under pressure inserted to the coupled position; and

Figure 3 is a view similar to Figure 2 after the nipple valve is opened and the coupler and nipple valve are in a balanced open position.

Referring to the drawing, a coupler 10 includes a coupler housing 11, a telescoping body member 12 and a nipple 13.

The housing 11 includes a cylindrical main housing 14 and a fitting 15 in threaded connection at one end thereof. The housing 11 further includes an entrance bore 16 and further inner bores 18-21, having shoulders 22-25 therebetween. The fitting 15 includes a tubular section 26 at one end and an internally threaded bore 28 at the other end in communication with one another and providing fluid communication to the interior of the housing 11.

The body member 12 comprises a generally cylindrical main body 30 of stepped diameters to be slidably received in the bores 16, 18 of the housing 11, and a tubular piston 31 in threaded connection at the axially inner end thereof. A first o-ring seal 32 is received in a groove at the ID of the piston 31 and is sized to slide over the OD of the tubular section 26 of the fitting 15 for sealed support of the inner end of the body member 12.

The piston 31 is stepped having outer surfaces 34, 35 with a shoulder 36 therebetween. The surfaces 34, 35 and the bores 19, 20 of the housing 11 form a variable volume annular chamber 38, sealed at either end by second and third o-ring seals 39, 40, received respectively in a groove in the bore 18 of the housing 11 and in a groove in the outer surface 35 of the piston 31.

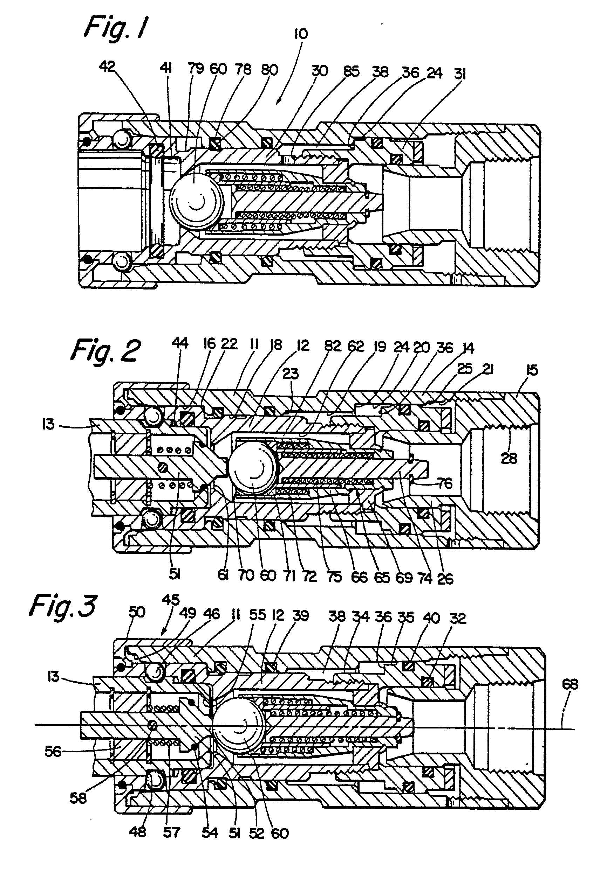

The body member 12 further includes an entrance bore 41 having an o-ring seal 42 therein which permits sliding receipt of a cylindrical nose portion 44 of the nipple 13. The body member 12 carries a locking device 45 at its axially outer end for releasably retaining the nipple 13 in the body member 12. The locking device 45 is a well known mechanism comprising a circular array of locking balls 46 retained in radial holes in the body member 12, cammed radially inwardly by the bore 16 of the housing 11 into a groove 48 on the OD of the nipple 13 when the body member 12 is moved to its axially inward position as depicted in Figures 2 and 3. In the axially outward position of the body member 12 depicted in Figure 1, the locking balls 46 are moved radially outwardly into a recess 49 at the entrance to the bore 16 to allow release of the nipple 13. A locking collar 50 is provided to allow for manual movement of the body member 12, however as will be described in greater detail, this is ordinarily not required as coupling and uncoupling is usually achieved by interengagement between the nipple 13 and the body member 12.

The nipple 13 is conventional and includes a conical nipple valve 51 having a cylindrical projection 52 and an o-ring seal 54 engageable with a seat 55 formed within the nose portion 44. The nipple valve 51 is capable of axial sliding movement in the mount 56 and is normally biased by a spring 57 into engagement with the valve seat 55. A stop pin 58 prevents excessive movement of the nipple valve 51 by engagement with the mount 56, thereby serving as a flow check device.

The body member 12 further includes a coupler valve 60 therein which co-operates with a transversely oriented circular coupler valve seat 61, as seen in Figure 1, to close one end of an inner bore 62 of the body member 12. The coupler valve 60 is a hardened steel ball and is spring loaded to seat on the hardened metal or elastomeric seat 61, acting as a typical poppet type valve. The coupler valve 60 is guided axially toward and away from the valve seat 61 by a resilient support 65 which includes a flow check mechanism therein.

The coupler valve support 65 comprises a generally cylindrical support 66 coaxially disposed on the axis 68 of the coupler 10, retained in a collar 69, the collar 69 having a shoulder thereon trapped between the main body member 30 and the piston 31, for movement with the body member 12. The coupler valve 60 is slidably received in a first bore 70 of the support 66, being urged toward the valve seat 61 by means of a valve guide 71 and a valve spring 72, the spring 72 acting between a shoulder in the support 66 and the valve guide 71. The valve guide 71 is of tubular configuration and is received in a counterbore in the support 66. A flow check mechanism is also contained in the support 66 and comprises an axially slidable pin 74, biased toward engagement with the coupler valve 60 by means of a flow check spring 75, the spring 75 being received in a further counterbore in the support 66. A stop comprising a clip 76 is received in a groove at one end of the pin 74 to limit axially outward movement of the pin 74 to the position depicted in Figures 1 and 3.

A detent mechanism comprising an o-ring 78 trapped in the housing 11 and axially outer and inner grooves 79, 80 in the body member 12 provides a device for restraining movement of the body member 12 at its axially inner and outer positions, respectively.

Referring now particularly to Figure 1, the coupler 10 is shown in the disconnected condition prior to receipt of the nipple 13. The fitting 15 of the coupler is typically threaded to a rigid conduit which is typically connected to a shut-off valve (not shown). A closed volume chamber 82 is therefore created within the body member 12 which is closed at one end by the seating of the coupler valve 60 at the coupler valve seat 61. In the uncoupled position depicted, the body member 12 is at its axially outward position with the detent o-ring 78 received in the inner detent groove 80 of the body member, tending to retain the body member in such outward position. Such condition could be achieved by a manual movement of the collar 50 if the body member 12 should be inadvertently positioned in its axially inward position. In the uncoupled condition the locking balls 46 are received in the recess 49 to allow entry of the nipple 13. In this condition the coupler valve 60 is urged against the valve seat 61 by the valve spring 72 by way of the guide 71 as well as by any residual fluid pressure within the chamber 82 acting upon the coupler valve 60. In this condition as well the shoulder 36 of the piston 31 is in engagement with the shoulder 24 of the housing 11 between the bores 19, 20 to provide a minimal volume condition for the annular chamber 38.

In Figure 2 the coupler 10 is depicted in a partially coupled condition with the nipple 13 fully inserted into the entrance bore 41 of the body member and with the body member 12 moved to the axially inward position with the detent o-ring 78 now received in the outer groove 79 of the body member. Prior to reaching this condition, however, as the nipple 13 is initially inserted, the detent o-ring 78 retains the body member temporarily in the axially outward position until the nose portion 44 of the nipple enters the sealing ring 42 and the groove 48 of the nipple 13 is positioned to receive the locking balls 46. This helps to ensure that a miscock does not occur whereby the coupler valve 60 is opened prior to a seal being achieved with the nose portion 44 of the nipple 13.

At such preliminary insertion position the cylindrical extension 52 of the nipple valve 51 engages the coupler valve 60 to move the valve 60 from the seat 61 thereby allowing full insertion of the nipple 13 into the entrance bore 41. With continued entry of the nipple 13, the nipple valve 51 urges the coupler valve 60 axially inwardly against the bias of the support spring 72 until the flow check pin 74 is first engaged, this condition occurring at the location when the axially outer edge of the coupler valve 60 is approximately at the location of the valve seat 61. This position also corresponds to the balance position depicted in Figure 3 and to be described in greater detail hereinafter.

Continued inward movement of the nipple 13 causes further inward movement of the coupler valve 60 and compression of the flow check spring 75 through the intermediacy of the flow check pin 74, causing movement of the pin 74 to an axially inward position. The spring 75 of the flow check mechanism 65 and the spring 72 of the valve support are selected so that the combination provides a stronger spring force than that of the nipple valve spring 57 to ensure that the nipple valve 51 is moved to an open position once hydraulic pressures are equalized within the couplers. Coupling may be achieved even though the nipple 13 is under pressure and it may be seen in Figure 2, that the nipple 13 may be inserted sufficiently far to compress the flow check spring 75 to achieve a large outwardly directed force upon the coupler valve 60 and the nipple valve 51 to tend to open the nipple valve 51. When the nipple valve 51 is cracked and the hydraulic pressure in the nipple 13 equalized, the flow check spring 75 will return the flow check pin 74 and the coupler valve 60 to the position depicted in Figure 3 where the axially outer edge of the coupler valve 60 is approximately in axial alignment with valve seat 61. The pin 74 is prevented from further axial outward movement by engagement of the clip 76 with the support 66 and may be slightly spaced from coupler valve 60 when in the position depicted in Figure 3. In this balanced position, the support spring 72 through the intermediary of the valve guide 71 provides a bias upon the coupler valve 60 substantially to match the bias provided upon the nipple valve 51 by the nipple valve spring 57 so as to position the two valves in a full open balanced condition.

Coupling of the nipple 13 to the body member 12 occurs substantially simultaneously with insertion of the nipple into the entrance bore 41. The detent o-ring 78 has retained the body member 12 in its axially outward position as seen in Figure 1 until the nipple nose portion 44 has passed the o-ring seal 42. Continued axial inward force upon the nipple 13 urges the body member 12 to overcome the detent o-ring 78 and slide to the axially inner position camming the locking balls 46 into the peripheral groove 48 on the nipple 13 to retain the nipple against relative movement with respect to the body member. Inward movement continues until the body member 12 engages the shoulder 22 of the housing 11 and the o-ring 78 is received in the outer groove 79 in the body member.

During such initial movement the coupler valve 60 may be seated against the valve seat 61 or a seal is achieved between the nipple nose portion 44 and the nipple seal 42 forming a trapped volume chamber 82 primarily defined by the bore 62 of the body member 12. To prevent a hydraulic lock condition, accommodation must be made for change in the volume of the chamber 82 as the body member 12 is moved axially inwardly and this is provided by the chamber 38 which is in fluid communication with the inner chamber 82 by means of a radial port 85 in the body member 12. The dimensions of the housing 11 at the bores 18 and 20 and at the outer surface of the tubular member 26 are selected so that the area sealed by the o-ring 32 is equal to the difference in areas sealed by the o-rings 40 and 39 so that a volume is defined in the annular chamber 38 which changes in volume as does the chamber 82. This allows the body member 12 freedom to move between its axially outward and inward positions during the coupling operation. By selection of these effective areas for the o-ring seals 32, 39, 40 an effective force balance is also provided upon the body member 12 so that no net substantial force is acting thereon once a control valve is opened and the coupling is pressurized. It would be possible as well to select appropriate areas for sealing by the o-rings so that a net axial inward force is developed upon the body member 12 to tend to retain the body member within the housing 11, necessitating only that such force be overcome when it is desired to uncouple the nipple 13 from the coupler 10.

When in a fully coupled condition as depicted in Figure 3 with the nipple valve 51 and coupler valve 60 in balanced position, it occasionally occurs that flow surges will be received from the implement side tending to move the nipple valve 51 to a closed position. Should this occur a fluid lock condition would prevent further hydraulic flow through the coupler. However, this is prevented in that the coupler valve 60 will be moved into engagement with the flow check pin 74 to compress the flow check spring 75. As noted, the rate of the flow check spring 75 is selected to be sufficiently high to prevent substantial axial inward movement of the coupler valve 60 thereby preventing complete closure of the nipple valve 51. Similarly the cross pin 58 is provided in the nipple valve 51 to prevent excess outward movement of the coupler valve 60 into engagement with its valve seat 61, thereby preventing flow checking by the coupler valve 60.

Particularly with couplers utilized with agricultural implements it is necessary that a breakaway type of uncoupling be provided in which uncoupling is automatically effected by an outward force directed to the nipple 13. Such outward force is resisted initially by the detent mechanism 78, 79. However, once this is overcome the body member 12 will move to the axially outward position on urging from the nipple 13 by way of the locking mechanism 45 until a position is reached where the locking balls 46 may enter the recess 49 to provide complete release of the nipple 13. With separation of the nipple 13 from the body member 12 the respective valves 51, 60 of the nipple and coupler will be returned to their valve closed positions by means of the bias springs 57, 72 rendering the respective conduits in closed condition.

**Claims**

1. A rigid mount coupler, comprising:
a housing;
a body member within the housing supported for axial movement relative to the housing between an inner and an outer position, the body member having an axially inner end and an axially outer end;
a nipple receivable in the body member at said axially outer end, the nipple having a nipple valve and a seat therein and bias means resiliently urging the nipple valve to a normally closed position, the nipple being engageable with the body member for moving the body member therewith to the inner position and to the outer position;
locking means on the body member holding the nipple at the inner position and releasing the nipple at said outer position;
a valve seat in the body member;
a coupler valve; and
support means resiliently supporting the coupler valve in the body member for axial movement toward and away from the valve seat, the coupler valve being engageable by the nipple valve, characterised in that the support means (65) provides substantially the same force as the nipple valve bias means (57) to balance both the valves (51, 60) at open positions relative to the respective valve seats (55, 61); and
flow check means (74, 75, 76) is resiliently supported in the body member and is engageable with the coupler valve (60) to resist movement of the coupler valve (60) to a more open position than the balanced open position, thereby also to resist movement of the nipple valve (51) toward the nipple valve seat (55).

2. A rigid mount coupler according to claim 1, characterised by:
first seal means (32) between the body member (12) and the housing (11), an inner chamber (82) within the body, and
second (39) and third (40) seal means between the body and the housing forming an outer chamber (38) between the body and the housing and a port (85) in the body member (12) providing fluid communication between the inner (82) and outer (38) chambers, the chambers varying in volume as the body is moved relative to the housing and being dimensioned so that changes in volume of the inner and outer chambers are substantially equal and opposite, so that fluid displaced from one of the chambers may be accommodated in the other of the chambers, by way of the port.

3. A rigid mount coupler according to claim 2, characterised in that the area of the coupler sealed by the first seal (32) is substantially equal to the difference between the areas of the coupler sealed by the second (39) and third (40) seals.

4. A rigid mount coupler according to claim 2 or claim 3, characterised in that the seals are o-ring seals.

5. A rigid mount coupler according to any one of claims 1 to 4, characterised by detent means (78, 80) between the body (12) and the housing (11) for releasably securing the body member in said outer position thereby to ensure that the nipple (13) is properly engaged in the body member (12).

6. A rigid mount coupler according to claim 5, characterised by a seal (42) in the body member (12) for sealing a nose portion (44) of the nipple (13), the detent means (78, 80) providing sufficient resistance to initial movement of the body member to allow the nipple to be inserted within the seal (42) and in locking relation with the locking means, before the detent means is overcome and the body member is moved toward said inner position.

7. A rigid mount coupler according to any one of claims 1 to 5, characterised in that the locking means comprises a circular array of balls (46) supported for axial movement with the body member (12) against a cam surface (49) of the housing (11) and for radial movement into and out of a groove (48) on the nipple (13).

8. A rigid mount coupler according to claim 5, characterised by detent means (78, 79) for releasably securing the body member (12) in said inner position, thereby to resist initial outward movement of the body member.

9. A rigid mount coupler according to claim 5 or claim 8, characterised in that the detent means comprises an o-ring fixed (78) in a groove in the housing (11) and a pair of spaced grooves (79, 80) in the body member (12) for receiving the o-ring (78).

10. A rigid mount coupler according to claim 2, characterised in that the body member (12) includes a bore at said axially inner end thereof, the bore is slidable over a tubular end section (26) of the housing (11) received therein, and the first seal means (32) seals the bore.

11. A rigid mount coupler according to claim 10, characterised in that the housing (11) includes a step (24) therein between larger (30) and smaller (19) bores and the body member includes a step (36) between larger (35) and smaller (34) surfaces thereof, the steps (24, 36) being in the outer chamber (38) and sealed on opposite axial sides thereof by the second (39) and third (40) seals to define the outer chamber (38).

12. A rigid mount coupler according to any one of claims 1 to 11, characterised in that the coupler valve support means comprises a support (66) mounted in the body member (12) for movement therewith, a bore (70) in the support (66) for receiving the coupler valve (60) for axial movement, a counterbore in the support (66), a tubular retainer (71) received in the counterbore for axial movement, and a spring (72) in the bore (70) urging the retainer (71) against the coupler valve (60) and toward the coupler valve seat (61).

13. A rigid mount coupler according to claim 12, characterised in that the flow check means comprises a pin (74) received for axially slidable movement in a second counterbore in the support (66), a second spring (75) urging the pin (74) outwardly into engagement with the coupler valve (60) and a stop (76) for preventing outward movement of the pin (74) at a predetermined location.

14. A rigid mount coupler according to claim 13, characterised in that the pin (74) engages the coupler valve (60) at a location where the coupler valve (60) and the nipple valve (51) are at balanced valve open positions, thereby to resist further inward valve opening movement of the coupler valve (60).

15. A rigid mount coupler according to claim 14, characterised in that the coupler valve is a ball valve (60) slidable in the bore (70) of the support (65) and the coupler valve seat (61) lies in a plane transverse to the axis (68) of the coupler.

**Patentansprüche**

1. Festmontagekupplung, umfassend:
ein Gehäuse,
einen in dem Gehäuse axial gegenüber dem Gehäuse zwischen eiber Innen und einer Außenstellung bewegbaren Innenköper, der ein axial inneres und ein axial äußeres Ende aufweist,
einen in den Innenkörper an dessen axial äußerem Ende einführbaren Nippel, der ein Nippelventil mit darin befindlichem Sitz sowie Vorbelastungsmittel besitzt, die das Nippelventil federnd in eine normalerweise geschlossene Stellung drücken, wobei der Nippel an dem Innenkörper anzugreifen vermag, um den Innenkörper durch in die Innenstellung und in die Außenstellung zu verlagern,
eine Verriegelungseinrichtung an dem Innenkörper, die den Nip pel in der Innenstellung festhält und ihn in der genannten Außenstellung freigibt,
einen Ventilsitz in dem Innenkörper,
ein Kupplungsventil und
eine Einrichtung zum federnden Halten des Kupplungsventils in dem Innenkörper zur Ausübung axialer Bewegungen in Richtung zu dem Ventilsitz hin und von dem Ventilsitz weg, wobei das Nippelventil das Kupplungsventil anzugreifen vermag,
dadurch gekennzeichnet, daß die Halteeinrichtung (65) im wesentlichen die gleiche Kraft ausübt wie die Vorbelastungseinrichtung (57) für das Nippelventil, um beide Ventile (51, 60) jeweils in Offenstellung gegenüber den zugehörigen Ventilsitzen (55, 61) im Gleichgewicht zu halten,
und daß die Rückschlagventilanordnung (74, 75, 76) federnd in dem Innenkörper gehalten wird und an dem Kupplungsventil (60) anzugreifen vermag, um der Bewegung des Kupplungsventils (60) in Richtung weiterer Öffnung, als der Öffnung in Gleichgewichtsstellung entspricht, Widerstand entgegenzusetzen und dadurch auch der Bewegung des Nippelventils (51) in Richtung auf den Nippelventilsitz (55) Widerstand entgegenzusetzen.

2. Festmontagekupplung nach Anspruch 1 gekenn zeichnet durch erste Dichtungsmittel (32) zwischen dem Innenkörper (12) und dem Gehäuse (11). eine Innenkammer (82) innerhalb des Innenkörpers, und zweite (39) und dritte (40) Dichtungsmittel zwischen dem Innenkörper und dem Gehäuse zur Bildung einer Außenkammer (38) zwischen dem Innenkörper und dem Gehäuse, und eine eine Fluidverbindung zwischen der Innenkammer (82) und der Außenkammer (38) bildende Öffnung (85) in dem Innenkörper (12), so daß sich die Rauminhalte der Kammern ändern, wenn der Innenkörper gegenüber dem Gehäuse bewegt wird, und daß die Kammern so bemessen sind, daß Änderungen des Rauminhalts der Innenkammer und der Außenkammer im wesentlichen gleich und einander entgegengesetzt sind, so daß das aus der einen Kammer ausgestoßene Fluid durch die Öffnung hindurch von der anderen Kammer aufgenommen werden kann.

3. Festmontagekupplung nach Anspruch 2, dadurch gekennzeichnet, daß die Flächengröße der von der ersten Dichtung (32) abgedichtete Kupplungsfläche im wesentlichen gleich ist der Differenz zwischen den von der zweiten (39) und der dritten (40) Dichtung abgedichteten Kupplungsflächengrößen.

4. Festmontagekupplung nach Anspruch 2 oder 3, dadurch gekennzeichnet, daß die Dichtungen O-Ring-Dichtungen sind.

5. Festmontagekupplung nach einem der Ansprüche 1 bis 4, gekennzeichnet durch Mittel (78,80) zum Einrasten zwischen dem Innenkörper (12) und dem Gehäuse (11) zum lösbaren Festhalten des Innenkörpers in der genannten Außenstellung, um zu gewährleisten, daß der Nippel (13) richtig in den Innenkörper (12) eingeführt wird.

6. Festmontagekupplung nach Anspruch 5, gekennzeichnet durch eine Dichtung (42) in dem Innenkörper (12) zum Abdichten eines Nasenabschnitts (44) des Nippels (13), wobei die Einrastmittel (78,80) einen so großen Widerstand gegenüber der Anfangsbewegung des Innenkörpers bieten, daß der Nippel in die Dichtung (42) eingeführt werden und in Verriegelungsbeziehung zu der Verriegelungseinrichtung gebracht werden kann, bevor die Einrastmittel überspielt werden und der Innenkörper in Richtung auf seine Innenstellung bewegt wird.

7. Festmontagekupplung nach einem der Ansprüche 1 bis 5, dadurch gekennzeichnet, daß die Verriegelungseinrichtung aus kreisförmig angeordneten Kugeln (46) besteht, die so gehalten sind, daß sie mit dem Innenkörper (12) axial gegen eine Nockenfläche (49) an dem Gehäuse (11) und radial in eine Nut (48) des Nippels (13) und aus dieser Nut heraus bewegbar sind.

8. Festmontagekupplung nach Anspruch 5, gekenn zeichnet durch eine Einrasteinrichtung (78, 79) zum lösbaren Sichern des Innenkörpers (12) in der genannten Innenstellung, um dadurch der anfänglichen Auswärtsbewegung des Innenkörpers Widerstand entgegenzusetzen.

9. Festmontagekupplung nach Anspruch 5 oder 8, dadurch gekennzeichnet, daß die Einrasteinrichtung einen in einer Nut in dem Gehäuse (11) befestigten O-Ring(78) sowie zwei in Abstand voneinander befindliche Nuten (79,80) in dem Innenkörper (12) für die Aufnahme des O-Rings (78) umfaßt.

10. Festmontagekupplung nach Anspruch 2, dadurch gekennzeichnet, daß der Innenkörper (12) eine Bohrung an seinem axial inneren Ende aufweist, welche über ein rohrförmiges Endstück (26) des darin befindlichen Gehäuses (11) verschiebbar ist, und daß das erste Dichtungsmittel (32) die Bohrung abdichtet.

11. Festmontagekupplung nach Anspruch 10, dadurch gekennzeichnet, daß das Gehäuse (11) in seinem Inneren eine Stufe (24) zwischen einer weiteren (30) und einer engeren Bohrung (19) aufweist, und daß der Innenkörper eine Stufe (36) zwischen seiner größeren (35) und kleineren (34) Fläche be sitzt, wobei die Stufen (24,36) sich in der Außenkammer (38) befinden. die an ihren axial entgegengesetzten Seiten durch die zweite (39) und dritte (40) Dichtung abgedichtet und dadurch definiert ist.

12. Festmontagekupplung nach einem der Ansprüche 1 bis 11, dadurch gekennzeichnet, daß die Halteeinrichtung für das Kupplungsventil einen Halter (66) umfaßt, der in dem In nenkörper (12) mit diesem zusammen bewegbar angebracht ist, eine Bohrung (70) in dem Halter (66) zur Aufnahme des darin axial bewegbaren Kupplungsventils (60), eine Sackbohrungin dem Halter (66), einen rohrförmigen Käfig (71), der in der Sackbohrung axial bewegbar aufgenommen ist, und in der Bohrung (70) eine Feder (72), welche den Käfig (71) gegen das Kupplungsventil (60) und in Richtung auf den Kupplungsventilsitz (61) drückt.

13. Festmontagekupplung nach Anspruch 12, dadurch gekennzeichnet, daß die Strömungsrückschlageinrichtung einen Stift (74) aufweist, der axial verschiebbar in einer zweiten Sackbohrung in dem Halter (66) aufgenommen ist, wobei eine zweite Feder (75) den Stift (74) auswärts an dem Kupplungs ventil (60) angreifen läßt, und einen Anschlag (76) zur Verhinderung der Auswärtsbewegung des Stifts (74) an einer vorbestimmten Stelle.

14. Festmontagekupplung nach Anspruch 13, dadurch gekennzeichnet, daß der Stift (74) das Kupplungsventil (60) in einer Stellung, in der das Kupplungsventil (60) und das Nippelventil (51) sich in Offenstellung im Gleichgewicht gegenüberstehen, derart angreift, daß der weiteren, einwärts gerichteten Offnungsbewegung des Kupplungsventils (60) Widerstand entgegengesetzt wird.

15. Festmontagekupplung nach Anspruch 14, dadurch gekennzeichnet, daß das Kupplungsventil als gleitbar in der Bohrung (70) des Halters (65) verschiebliches Kugelventil (60) ausgeführt ist und der Kupplungsventilsitz (61) in einer quer zu der Achsae (68) der Kupplung verlaufenden Ebene liegt.

## Revendications

1. Raccord à montage rigide, comprenant:
— un boîtier.
— un élément de corps monté dans ce boîtier de manière à pouvoir se déplacer axialement par rapport à celui-ci entre une position intérieure et une position extérieure, l'élément de corps comportant une extrémité axialement intérieure et une extrémité axialement extérieure;
— un embout pouvant venir se loger dans l'élément de corps à son extrémité axialement extérieure, cet embout contenant une soupape d'embout et un siège de soupape, ainsi que des moyens de poussée poussant élastiquement la soupape d'embout vers une position normalement fermée, l'embout pouvant s'engager dans l'élément de corps pour se déplacer solidairement de celuic-i en l'amenant dans la position intérieure et dans la position extérieure;
— des moyens de verrouillage montés sur l'élément de corps pour retenir l'embout dans la position intérieure' et pour libérer cet embout dans la position extérieure;
— un siège de soupape placé dans l'élément de corps;
— une soupape de raccord; et
— des moyens de support supportant élastiquement la soupape de raccord dans l'élément de corps pour qu'elle puisse se déplacer axialement en se rapprochant et en s'écartant du siège de soupape, la soupape de raccord pouvant recevoir la soupape d'embout, raccord caractérisé en ce que les moyens de support (65) produisent exactement la' même force que les moyens de poussée (57) de la soupape d'embout, de manière à équilibrer les deux soupapes (51, 60), en position d'ouverture par rapport aux sièges de soupape respectifs (55, 61); et en qu'un dispositif d'arrêt de débit (74, 75, 76) est monté élastiquement dans l'élément de corps et peut venir en prise avec la soupape de raccord (60) pour résister au mouvement de la soupape de raccord (60) vers une position plus ouverte que la position d'ouverture équilibrée, en résistant également ainsi au mouvement de la soupape d'embout (51) vers le siège de soupape d'embout (55).

2. Raccord à montage rigide selon la revendication 1, caractérisé en ce qu'il comprend:
— un premier dispositif d'étanchéité (32) entre l'élément de corps (12) et le boîtier (11), une chambre intérieure (82) à l'intérieur du corps, et des second (39) et troisième (40) dispositifs d'étanchéité entre le corps et le boîtier pour former une chambre extérieure (38) entre le corps et le boîtier, et un orifice (85) ménagé dans l'élément de corps (12) pour assurer la communication de fluide entre les chambres intérieure (82) et extérieure (38), les chambres variant de volume, lorsque le corps se déplace par rapport au boîtier et ces chambres étant dimensionnées de façon que les changements de volume des chambres intérieure et extérieure soient exactement égaux et opposés, de façon que le fluide sortant de l'une des chambres puisse être complètement reçu dans l'autre chambre en passant par l'orifice (85).

3. Raccord à montage rigide selon la revendication 2, caractérisé en ce que la zone du raccord dont l'étanchéité est assurée par le premier joint d'étanchéité (32), est exactement égal'à la différence entre les zones de raccord dont l'étanchéité est assurée par les second (39) et troisième (40) joints d'étanchéité.

4. Raccord à montage rigide selon l'une quelconque des revendications 2 et 3, caractérisé en ce que les joints d'étanchéité sont des joints toriques.

5. Raccord à montage rigide selon l'une quelconque des revendications 1 à 4, caractérisé en ce qu'il comporte des moyens de détente (78, 80) entre le corps (12) et le boîtier (11) pour fixer de manière amovible l'élément de corps dans la position extérieure, de manière à s'assurer ainsi que l'embout (13) est convenablement engagé dans l'élément de corps (12).

6. Raccord à montage rigide selon la revendication 5, caractérisé en ce qu'il comprend un joint d'étanchéité (42) dans l'élément de corps (12) pour assurer l'étanchéité d'une partie de nez (44) de l'embout (13), et en ce que les moyens de détente (78, 80) offrent une résistance suffisante au mouvement initial de l'élément de corps pour permettre à l'embout d'être introduit dans le joint d'étanchéité (42) dans une relation de verrouillage avec les moyens de verrouillage, avant que les moyens de détente soient surmontés et que l'élément de corps se soit déplacé vers la position intérieure.

7. Raccord à montage rigide selon l'une quelconque des revendications 1 à 5, caractérisé en ce que les moyens de verrouillage sont constitués par un ensemble circulaire de billes (46) supportées de manière à se déplacer axialement avec l'élément de corps (12) contre une surface de came (49) du boîtier (11), et à se déplacer radialement pour entrer et sortir d'une rainure (48) formée sur l'embout (13).

8. Raccord à montage rigide selon la revendication 5, caractérisé en ce qu'il comprend des moyens de détente (78, 79) pour fixer de manière amovible l'élément de corps (12) dans la position intérieure, afin de résister ainsi au mouvement initial vers l'extérieur de l'élément de corps.

9. Raccord à montage rigide selon l'une quelconque des revendications 5 à 8, caractérisé en ce que les moyens de détente sont constitués par un anneau torique (78) fixé dans une rainure du boîtier (11), et par une paire de rainures espacées (79, 80) ménagées dans l'élément de corps (12) pour recevoir l'anneau torique (78).

10. Raccord à montage rigide selon la revendication 2, caractérisé en ce que l'élément de corps (12) comporte un alésage à son extrémité axialement intérieure, cet alésage pouvant glisser sur une section d'extrémité tubulaire (26) du boîtier (11) venant se loger dans celui-ci, et en ce que le premier dispositif d'étanchéité (32) assure l'étanchéité de cet alésage.

11. Raccord à montage rigide selon la revendication 10, caractérisé en ce quele boîtier (11) comporte une partie étagée intérieure (24) entre le plus grand alésage (30) et le plus petit alésage (19), et en ce que l'élément de corps comporte une partie étagée (36) entre sa plus grande surface (35) et sa plus petite surface (34), les parties étages (24, 36) se trouvant dans la chambre extérieure (38) et se trouvant scellées, sur les côtés opposés axiaux de celles-ci, par les second (39) et troisième (40) joints d'étanchéité, pour définir la chambre extérieure (38).

12. Raccord à montage rigide selon l'une quelconque des revendications 1 à 11, caractérisé en ce que les moyens de support de soupape de raccord comprennent un support (66) montés dans l'élément de corps (12) pour se déplacer avec celui-ci, un. alésage (70) formé dans le support (66) pour recevoir la soupape de raccord (60) dans son mouvement axial, un contre-trou ménagé dans le support (66), un élément de retenue tubulaire (71) venant se loger dans le contre-trou pour se déplacer axialement, et un ressort (72) placé dans l'alésage (70) pour pousser l'élément de retenue (71) contre la soupape de raccord (60) et vers le siège de soupape de raccord (61).

13. Raccord à montage rigide selon la revendication 12, caractérisé en ce que le dispositif d'arrêt de débit comprend un tige (74) venant se loger pour effectuer un mouvement de glissement axial dans un second contre-trou du support (66), un second ressort (75) poussant la tige (74) vers l'extérieur pour qu'elle vienne s'appuyer contre la soupape de raccord (60), et une butée (76) destinée à empêcher le mouvement vers l'extérieur de la tige (74) en un point prédétermine.

14. Raccord à montage rigide selon la revendication 13, caractérisé en ce que la tige (74) s'engage contre la soupape de raccord (60) en un point où la soupape de raccord (60) et la soupape d'embout (51) sont dans des positions d'ouverture de soupape équilibrées, ce qui permet ainsi de résister à tout mouvement supplémentaire d'ouverture vers l'intérieur de la soupape de raccord (60).

15. Raccord à montage rigide selon la revendication 14, caractérisé en ce que la soupape de raccord est une soupape à bille (60) pouvant glisser dans l'alésage (70) du support (65), et en ce que le siège de soupape de raccord (71) se trouve dans un plan transversal par rapport à l'axe (68) du raccord.

*Fig. 1*

*Fig. 2*

*Fig. 3*